# EUROPÄISCHE PATENTANMELDUNG

(11) **EP 4 001 690 A1**
(43) Veröffentlichungstag der Anmeldung: **25.05.2022**
(21) Anmeldenummer: 21199053.6
(22) Anmeldetag: 27.09.2021
(51) Int. Cl.: F16F 1/38

(54) **SYSTEM AUS EINER FLEXIBLEN LAGERAUSSENHÜLSE EINES ELASTOMERLAGERS UND EINEM LAGERROHR**

(30) Priorität: 13.11.2020 DE 102020214302
(71) Anmelder: VOLKSWAGEN AG, 38440 Wolfsburg (DE)
(72) Erfinder: Schönhoff, Nico, 38118 Braunschweig (DE); Harke, Jana-Maria, 38114 Braunschweig (DE); Ziwica, Carsten, 38114 Braunschweig (DE)

(57) **Zusammenfassung**

Die Erfindung betrifft ein System (1) aus einer flexiblen Lageraußenhülse (10) eines Elastomerlagers und einem Lagerrohr (20), wobei die Lageraußenhülse (10) und das Lagerrohr (20) dazu eingerichtet sind, dass die Lageraußenhülse (10) entlang einer Einpressrichtung (2) in das Lagerrohr (20) eingepresst wird, um einen formschlüssigen Verbund (4) zwischen der Lageraußenhülse (10) und dem Lagerrohr (20) herzustellen, wobei die Lageraußenhülse (10) ein Außenprofil (14) mit nach außen abstehenden Absätzen (12.1, 12.2) und in die Einpressrichtung (2) nach innen verlaufenden Einführschrägen (11.1, 11.2) aufweist, und wobei das Lagerrohr (20) ein zu dem Außenprofil (14) der Lageraußenhülse (10) formschlüssig korrespondierendes Innenprofil (24) für den formschlüssigen Verbund zwischen der Lageraußenhülse (10) und dem Lagerrohr (20) aufweist. Zumindest das Innenprofil (24) des Lagerrohrs (20) ist starr ausgebildet, sodass sich das Außenprofil (14) der Lageraußenhülse (10) beim Einpressen der Lageraußenhülse (10) in das Lagerrohr (20) verformen kann und das Innenprofil (24) des Lagerrohrs (20) beim Einpressen der Lageraußenhülse (10) in das Lagerrohr (20) nicht verformen kann.

## Beschreibung

Die Erfindung betrifft ein System aus einer flexiblen Lageraußenhülse eines Elastomerlagers und einem Lagerrohr, einen formschlüssigen Verbund der Lageraußenhülse mit dem Lagerrohr sowie ein Kraftfahrzeug mit dem formschlüssigen Verbund.

Elastomerlager dienen der Verbindung von zwei Baugruppen miteinander, um beispielsweise Schwingungen, Stöße und Geräusche abzufangen bzw. die Übertragung solcher von Baugruppe zu Baugruppe zu verhindern. Sie werden beispielsweise im Automobilbau eingesetzt.

Im Automobilbau sind die Anforderungen an Elastomerlager aufgrund der Elektrifizierung stark gestiegen. Im Konkreten ist die zu erfüllende Auspresskraft, die als Maß für einen festen Sitz eines Elastomerlagers im Lagerrohr gilt, gestiegen. Anders als früher lässt sich die gewünschte Auspresskraft für viele Anwendungen, wie beispielsweise die Lagerung von Elektromotoren an Hilfsrahmen von Kraftfahrzeugen, nicht mehr nur mit Hilfe einer Überdeckung der Lageraußenhülse eines Elastomerlagers mit dem Lagerrohr realisieren.

Aus der EP 2 456 995 B1 ist ein Verbund von einem Elastomerlager und einer dessen kreiszylindrische Außenschale aus Elastomer umgebenden Hülse bekannt. In der Wand der hohlzylindrischen Hülse sind mehrere über den Umfang der Hülse gleichmäßig verteilte und nach innen vorspringende elastische Einprägungen eingebracht. Die elastischen Einprägungen bilden in Richtung des Einpressvorganges des Elastomerlagers in die Hülse betrachtet trichterformartige Verengungen des freien Querschnitts der Hülse. Beim Einpressen des Elastomerlagers in die Hülse gleitet die Außenschale unter elastischer Verformung über Abschrägungen der elastischen Einprägungen, welche sich hierbei ebenfalls elastisch verformen, in eine Endlage, in der die Außenschale in der Hülse eingerastet ist.

Die Lösung mit den elastischen Einprägungen, welche auch als Rastnasen bezeichnet werden können, ist insoweit nachteilig, als dass der Verbund aus dem Elastomerlager und dem Lagerrohr einen hohen Fertigungsaufwand mit sich bringt. So ist das Lagerrohr mit seinen elastischen Einprägungen bzw. Rastnasen nur sehr umständlich fertigbar und das Fügen von Elastomerlager und Lagerrohr ist ebenso aufwändig. Ferner ist der Verbund nicht verdrehbar und auch nicht symmetrisch, was Einschränkungen für die Montage des Verbundes, insbesondere eine Kombinierbarkeit, Anbindungspunkte am Lagerrohr, beispielsweise für Schweißnähte, und die Positionierung einer Clinchnaht mit sich bringt.

Aufgabe der Erfindung ist es demnach, ein System aus einer flexiblen Lageraußenhülse eines Elastomerlagers und einem Lagerrohr bereitzustellen, welches nicht die Nachteile aus dem Stand der Technik aufweist, insbesondere einfacher fertigbar und montierbar ist.

Die voranstehende Aufgabe wird durch die Gegenstände der Patentansprüche, insbesondere durch ein System aus einer flexiblen Lageraußenhülse eines Elastomerlagers und einem Lagerrohr nach Anspruch 1, einen formschlüssigen Verbund einer Lageraußenhülse eines Elastomerlagers mit einem Lagerrohr nach Anspruch 9 sowie ein Kraftfahrzeug nach Anspruch 10 gelöst. Weitere Vorteile und Details der Erfindung ergeben sich aus den Unteransprüchen, der Beschreibung und den Zeichnungen. Dabei gelten Merkmale und Details, die im Zusammenhang mit dem erfindungsgemäßen System beschrieben sind, selbstverständlich auch im Zusammenhang mit dem erfindungsgemäßen formschlüssigen Verbund und dem erfindungsgemäßen Kraftfahrzeug sowie jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die eingangs erwähnte Aufgabe gelöst durch ein System aus einer flexiblen Lageraußenhülse eines Elastomerlagers und einem Lagerrohr. Die Lageraußenhülse und das Lagerrohr sind dazu eingerichtet, dass die Lageraußenhülse entlang einer Einpressrichtung in das Lagerrohr eingepresst wird, um einen formschlüssigen Verbund zwischen der Lageraußenhülse und dem Lagerrohr herzustellen. Dabei weist die Lageraußenhülse ein Außenprofil mit nach außen abstehenden Absätzen und in die Einpressrichtung nach innen verlaufenden Einführschrägen auf. Das Lagerrohr weist ein zu dem Außenprofil der Lageraußenhülse formschlüssig korrespondierendes Innenprofil für den formschlüssigen Verbund zwischen der Lageraußenhülse und dem Lagerrohr auf. Zumindest das Innenprofil des Lagerrohrs ist starr ausgebildet, sodass sich das Außenprofil der Lageraußenhülse beim Einpressen der Lageraußenhülse in das Lagerrohr verformen kann und das Innenprofil des Lagerrohrs beim Einpressen der Lageraußenhülse in das Lagerrohr nicht verformen kann.

Anders als im Stand der Technik werden bei der Erfindung keine flexiblen Rastnasen bereitgestellt. Stattdessen wird ein starres Innenprofil bereitgestellt, welches sich beim Einpressen der flexiblen Lageraußenhülse weder elastisch noch plastisch verformen kann. Starr bedeutet im erfindungsgemäßen Sinne mit Bezug auf das Lagerrohr also, dass das Lagerrohr sich beim Einpressen der Lageraußenhülse bzw. des Elastomerlagers mit der Lageraußenhülse weder elastisch noch plastisch verformen kann. Flexibel bedeutet im erfindungsgemäßen Sinne mit Bezug auf die Lageraußenhülse hingegen, dass die Lageraußenhülse sich beim Einpressen in das Lagerrohr elastisch verformen kann. Da die Lageraußenhülse also flexibel ist, kann zum Einpressen der Lageraußenhülse in das Lagerrohr einzig die Lageraußenhülse verformt werden.

Als Außenprofil wird dabei die Kontur verstanden, die die äußere Mantelfläche der Lageraußenhülste bildet und für den Formschluss mit dem Innenprofil vorgesehen ist. Das Außenprofil umfasst also alle Elemente, wie Absätze und Einführschrägen, die mit entsprechenden Gegenelementen des Innenprofils den Formschluss ausbilden. Ebenso umfasst das Innenprofil diese Gegenelemente und wird als die Kontur verstanden, die die innere Mantelfläche des Lagerrohrs bildet und für den Formschluss mit dem Außenprofil vorgesehen ist.

Das Lagerrohr mit dem starren Innenprofil ist wesentlich einfacher und kostengünstiger fertigbar, was wiederum ein kostengünstigeres System aus flexibler Lageraußenhülse und Lagerrohr bereitstellt. Das Einpressen der Lageraußenhülse in das Lagerrohr kann dabei wegen des Außenprofils der Lageraußenhülse mit den Einführschrägen unter geringem Kraftaufwand bzw. mit geringer Einpresskraft erfolgen, während für das Demontieren des derart hergestellten Verbunds eine sehr hohe Auspresskraft erforderlich ist, sodass ein besonders fester Sitz des Elastomerlagers in dem Lagerrohr bereitgestellt wird.

Es kann vorgesehen sein, dass die Absätze und/oder die in die Einpressrichtung verlaufenden Einführschrägen entlang 20 % bis 100 %, insbesondere 40 % bis 100 % und ganz besonders 80 % bis 100 % eines Außenumfangs der Lageraußenhülse verlaufen. Mit anderen Worten können die Absätze und/oder die Einführschrägen mit einem Umfang im Bereich von 20 % bis 100 %, insbesondere im Bereich von 40 % bis 100 % und ganz besonders im Bereich von 80 % bis 100 % des gesamten Außenumfangs der Lageraußenhülse ausgebildet sein. Insbesondere können die Absätze und/oder die Einführschrägen also teilweise entlang des Außenumfangs der Lageraußenhülse verlaufend, mit oder ohne eine Unterbrechung oder mehrere Unterbrechungen dazwischen, oder vollständig bzw. durchgehend entlang des Außenumfangs der Lageraußenhülse verlaufend ausgebildet sein. Dies erlaubt nicht nur eine höhere Auspresskraft infolge der größeren Fläche für den Formschluss zwischen der Lageraußenhülse und dem Lagerrohr, sondern auch ein symmetrisches und damit einfach fertigbares und mit dem Lagerrohr verbindbares Außenprofil der Lageraußenhülse bzw. des Elastomerlagers im Gesamten.

Ferner kann vorgesehen sein, dass das Innenprofil zu den Absätzen formschlüssig korrespondierende Gegenabsätze und zu den Einführschrägen formschlüssig korrespondierende und in die Einpressrichtung verlaufende Gegeneinführschrägen aufweist. Die formschlüssige Korrespondenz bedeutet, dass die jeweiligen Elemente der Profile, also Absätze und Gegenabsätze sowie Einführschrägen und Gegeneinführschrägen, im verbundenen Zustand der Lageraußenhülse und des Lagerrohrs einen Formschluss ausbilden. Dadurch kann ein robuster Formschluss durch eine Art Verzahnung jeweiliger Elemente der beiden Profile bereitgestellt werden.

Hierbei kann vorgesehen sein, dass die Gegenabsätze und/oder die in die Einpressrichtung verlaufenden Gegeneinführschrägen entlang 20 % bis 100 %, insbesondere 40 % bis 100 % und ganz besonders 80 % bis 100 % eines Innenumfangs des Lagerrohrs verlaufen. Mit anderen Worten können die Gegenabsätze und/oder die Gegeneinführschrägen mit einem Umfang im Bereich von 20 % bis 100 %, insbesondere im Bereich von 40 % bis 100 % und ganz besonders im Bereich von 80 % bis 100 % des gesamten Innenumfangs des Lagerrohrs ausgebildet sein. Insbesondere können die Gegenabsätze und/oder die Gegeneinführschrägen also teilweise entlang des Innenumfangs des Lagerrohrs verlaufend, mit oder ohne eine Unterbrechung oder mehrere Unterbrechungen dazwischen, oder vollständig bzw. durchgehend entlang des Innenumfangs des Lagerrohrs verlaufend ausgebildet sein. Dies erlaubt nicht nur eine höhere Auspresskraft durch der größeren Fläche für den Formschluss zwischen der Lageraußenhülse und dem Lagerrohr, sondern auch ein symmetrisches und damit einfach fertigbares und mit dem Lagerrohr verbindbares Außenprofil der Lageraußenhülse bzw. der Lageraußenhülse im Gesamten.

Insbesondere kann ein teilweise, überwiegend oder vollständig umlaufend formschlüssiger Verbund zwischen der Lageraußenhülse und dem Lagerrohr vorgesehen werden. Dabei kann das Innenprofil teilweise, überwiegend oder vollständig umlaufend zu dem Außenprofil formschlüssig korrespondieren. Dies erlaubt eine flexiblere Ausrichtung der Lageraußenhülse bzw. des Elastomerlagers beim Fügen mit dem Lagerrohr.

Ferner kann vorgesehen sein, dass die Einführschrägen an den nach außen abstehenden Absätzen ansetzen und nach innen verlaufen. Nach innen meint zu einer Mitte bzw. zu einer Mittelachse der Lageraußenhülse hin. Die Mittelachse kann insbesondere eine Drehsymmetrieachse des Außenprofils sein. Das Außenprofil kann also drehsymmetrisch um die Mittelachse der Lageraußenhülse ausgebildet sein.

Auch kann vorgesehen sein, dass gerade Abschnitte an den Einführschrägen ansetzen und zu den Absätzen verlaufen. Jeweils ein gerader Abschnitt kann somit zwischen einer Einführschräge und einem Absatz angeordnet sein. Auch an den Gegeneinführschrägen können zu den geraden Abschnitten formschlüssig korrespondierende gerade Gegenabschnitte ansetzen und zu den Gegenabsätzen verlaufen. Diese Anordnung minimiert eine ansonsten mögliche Kerbwirkung in dem Lagerrohr.

Außerdem kann vorgesehen sein, dass das Lagerrohr starr, insbesondere aus einem Metall, ausgebildet ist. Mit anderen Worten kann also das gesamte Lagerrohr einschließlich seines Innenprofils starr ausgebildet sein. Dies erleichtert die Fertigung, da das Lagerrohr aus einem einzigen Material hergestellt werden kann. Beispielsweise kann das Lagerrohr ein Blechstreifen sein, der zu einem Rohr geformt ist. Auf eine Seite dieses Blechstreifens kann das Innenprofil eingepresst sein. Bei einem metallischen Lagerrohr, insbesondere aus Stahl, können andere Komponenten einfach an das Lagerrohr angeschweißt werden.

Die Lageraußenhülse kann aus einem Kunststoff, insbesondere aus einem Elastomer, gebildet sein, um seine flexiblen Eigenschaften bereitzustellen.

Weiterhin kann vorgesehen sein, dass die Absätze sich in einem rechten Winkel zu einer Mittelachse der Lageraußenhülse erstrecken. Auch die Gegenabsätze können sich in einem rechten Winkel zu einer Mittelachse des Lagerrohrs erstrecken. Auch die Mittelachse des Lagerrohrs kann eine Drehsymmetrieachse des Innenprofils sein. Das Innenprofil kann also drehsymmetrisch um die Mittelachse des Lagerrohrs ausgebildet sein. Durch eine derartige Ausbildung der Absätze und/oder Gegenabsätze wird die Auspresskraft maximiert, wobei Hinterschneidungen in dem Lagerrohr vermieden werden, um eine einfache Fertigung des Lagerrohrs zu ermöglichen.

Schließlich kann vorgesehen sein, dass der geringste Außendurchmesser der Lageraußenhülse größer als der geringste Innendurchmesser des Lagerrohrs ist. Entsprechend ergibt sich neben dem Formschluss auch eine Presspassung bzw. ein Kraftschluss zwischen der Lageraußenhülse und dem Lagerrohr. Dabei überdecken sich die Lageraußenhülse und das Lagerrohr in einem Bereich, in dem die Lageraußenhülse komprimiert wird und eine Kraft auf das Lagerrohr ausübt. Die Auspresskraft zum Demontieren der Lageraußenhülse von dem Lagerrohr wird dadurch weiter erhöht.

Gemäß einem zweiten Aspekt der Erfindung wird die eingangs erwähnte Aufgabe gelöst durch einen formschlüssigen Verbund einer Lageraußenhülse eines Elastomerlagers des Systems gemäß dem zweiten Aspekt der Erfindung und mit einem Lagerrohr des Systems gemäß dem zweiten Aspekt der Erfindung.

Dabei wurde die Lageraußenhülse in Einpressrichtung mit dem Elastomerlager gefügt, um dadurch den formschlüssigen Verbund aus Lageraußenhülse und Lagerrohr herzustellen. Selbstverständlich kann der formschlüssige Verbund auch das Elastomerlager aufweisen bzw. kann die Lageraußenhülse mit ihrem Elastomerlager mit dem Lagerrohr verbunden sein.

Gemäß einem dritten Aspekt der Erfindung wird die eingangs erwähnte Aufgabe gelöst durch ein Kraftfahrzeug mit einem formschlüssigen Verbund nach dem zweiten Aspekt der Erfindung. Ein Elastomerlager, welches die Lageraußenhülse aufweist, die mit dem Lagerrohr formschlüssig verbunden ist, ist dabei mit einer ersten Fahrzeugkomponente des Kraftfahrzeugs gekoppelt. Das Lagerrohr ist dabei mit einer zweiten Fahrzeugkomponente des Kraftfahrzeugs gekoppelt.

Die erste Fahrzeugkomponente kann beispielsweise ein Elektromotor des Kraftfahrzeugs sein und die zweite Fahrzeugkomponente kann beispielsweise ein Hilfsrahmen sein. Das Kraftfahrzeug kann entsprechend ein elektrifiziertes Kraftfahrzeug, beispielsweise ein Elektrofahrzeug oder ein Plug-In Hybrid-Fahrzeug, sein. Der Hilfsrahmen kann mit dem Lagerrohr insbesondere verschweißt sein. Dadurch ergibt sich eine vorteilhafte Verwendung eines formschlüssigen Verbunds mit den besonders hohen Auspresskräften, da der Elektromotor ein hohes Gewicht aufweist und auch im Fahrzeugbetrieb mit den dabei auftretenden Schwingungen und Lasten nicht aus dem Lagerrohr ausgepresst werden kann.

Selbstverständlich kann der formschlüssige Verbund aber auch für andere Fahrzeugkomponenten in einem Kraftfahrzeug verwendet werden, bei denen ein Elastomerlager hohen Beanspruchungen ausgesetzt wird. Auch ist der formschlüssige Verbund selbstverständlich in anderen technischen Einsatzgebieten außerhalb von Kraftfahrzeugen einsetzbar.

Anhand der beigefügten Zeichnungen wird die Erfindung nachfolgend näher erläutert. Sämtliche aus den Ansprüchen, der Beschreibung oder der Figur hervorgehenden Merkmale, einschließlich konstruktiver Einzelheiten, können sowohl für sich als auch in den beliebigen verschiedenen Kombinationen erfindungswesentlich sein. Es zeigen:
- Fig. 1: eine schematische Ansicht eines Systems gemäß einem Ausführungsbeispiel der Erfindung;
- Fig. 2: eine schematische Ansicht der Profile der Lageraußenhülse und des Lagerrohrs des Systems aus Fig. 1;
- Fig. 3: eine schematische Ansicht der Presspassung der Profile aus Fig. 2; und
- Fig. 4: eine schematische Ansicht eines Kraftfahrzeugs gemäß einem Ausführungsbeispiel der Erfindung.

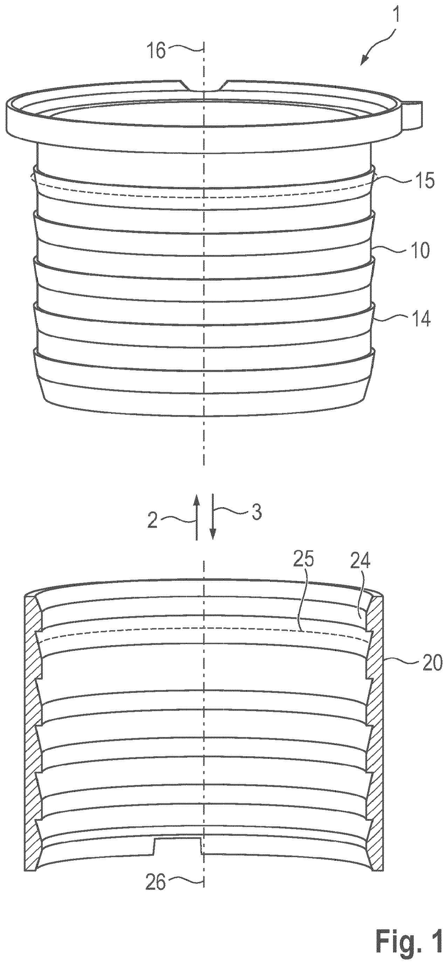

Elemente mit gleicher Funktion und Wirkungsweise sind in den Figuren 1 bis 4 jeweils mit denselben Bezugszeichen versehen.

Figur 1 zeigt ein System 1 aus einer flexiblen Lageraußenhülse 10, vorliegend aus einem Kunststoff, insbesondere aus einem Elastomer, und einem starren Lagerrohr 20, vorliegend aus Metall. Die Lageraußenhülse 10 ist dabei in einer frontalen Ansicht gezeigt, während das Lagerrohr 20 in einer Querschnittsansicht gezeigt ist, die das Innere des Lagerrohrs 20 offenlegt.

Die Lageraußenhülse 10 weist ein Außenprofil 14 auf, welches entlang eines Außenumfangs 15 der Lageraußenhülse 10 verläuft. Das Außenprofil 14 ist um eine Mittelachse 16 der Lageraußenhülse 10 herum symmetrisch ausgebildet. Dadurch ist das Außenprofil 14 entlang des gesamten Außenumfangs 14 herum an der Lageraußenhülse ausgebildet.

Das Lagerrohr 20 weist seinerseits ein zu dem Außenprofil 14 der Lageraußenhülse 10 für einen Formschluss korrespondierendes Innenprofil 24 auf. Das Innenprofil 24 verläuft entlang eines Innenumfangs 25 des Lagerrohrs 20. Das Innenprofil 24 ist um eine Mittelachse 26 des Lagerrohrs 20 herum symmetrisch ausgebildet. Dadurch ist das Innenprofil 24 entlang des gesamten Innenumfangs 24 herum an dem Lagerrohr 20 ausgebildet.

Der symmetrische Aufbau bzw. das Bereitstellen der Profile 14, 24 um die Umfänge 15, 25 herum ermöglicht einen umlaufenden Formschluss zwischen der Lageraußenhülse 10 und dem Lagerrohr 20, wie er im Folgenden beschrieben wird. Dies ermöglicht eine flexible Ausrichtung der Lageraußenhülse 10 beim Fügen mit dem Lagerrohr 20.

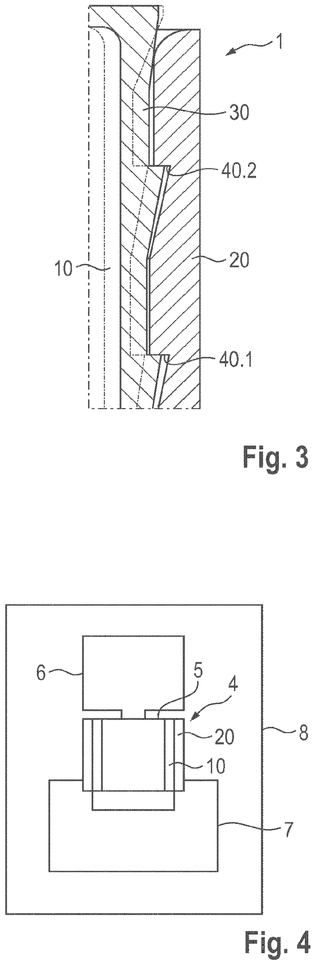

Um einen formschlüssigen Verbund 4 (siehe Fig. 3, 4) der Lageraußenhülse 10 mit dem Lagerrohr 20 herzustellen, wird die Lageraußenhülse 10, insbesondere als Bestandteil ihres

Elastomerlagers 5 (siehe Fig. 4) bzw. mit dem Elastomerlager 5 als Ganzes, in das Lagerrohr 20 eingepresst. Dies erfolgt in die in der Fig. 1 gezeigte Einpressrichtung 2.

Entgegengesetzt zu der Einpressrichtung 2 besteht die Auspressrichtung 3. Als Maß für den festen Sitz des Elastomerlagers 5 im Lagerrohr 20 gilt die in Auspressrichtung 3 zu erfüllende Auspresskraft, um den festen Sitz zu lösen.

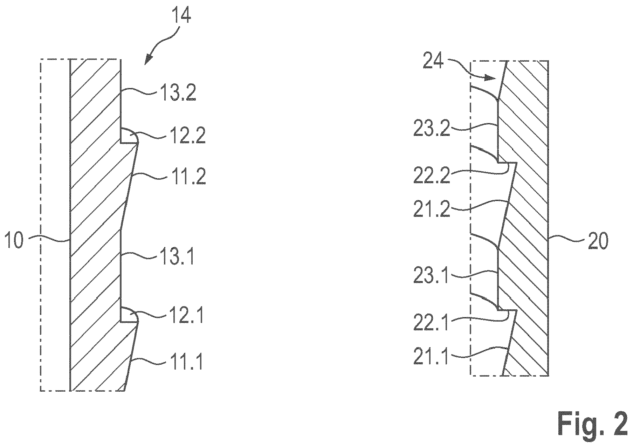

Der Formschluss in dem formschlüssigen Verbund 4 wird durch das Außenprofil 14 und das Innenprofil 24 hergestellt, die sich miteinander sägezahnartig verzahnen. Figur 2 zeigt jeweils einen detaillierten Ausschnitt der Profile 14, 24.

In dem linken Teil der Fig. 2 ist der Ausschnitt des Außenprofils 14 der Lageraußenhülse 10 zu sehen. Das Außenprofil 14 ist mit nach außen abstehenden Absätzen 12.1, 12.2 und in die Einpressrichtung 2 nach innen verlaufenden Einführschrägen 11.1, 11.2 ausgebildet. Die Einführschrägen 11.1, 11.2 setzen dabei jeweils an den Absätzen 12.1, 12.2 an und verlaufen in die Einpressrichtung 2. Zwischen je einem der Absätze 12.1, 12.2 und einer der Einführschrägen 11.1, 11.2 verläuft je ein gerader Abschnitt 13.1, 13.2.

In dem rechten Teil der Fig. 2 ist der Ausschnitt des Innenprofils 24 des Lagerrohrs 20 zu sehen. Das Innenprofil 24 ist mit nach außen abstehenden Gegenabsätzen 22.1, 22.2 und in die Einpressrichtung 2 nach innen verlaufenden Gegeneinführschrägen 21.1, 21.2 ausgebildet, die für einen Formschluss mit den Absätzen 12.1, 12.2 und den Einführschrägen 11.1, 11.2 korrespondierend zu diesen dimensioniert sind. Die Gegeneinführschrägen 11.1, 11.2 setzen dabei ebenfalls jeweils an den Gegenabsätzen 22.1, 22.2 an und verlaufen in die Einpressrichtung 2. Zwischen je einem der Gegenabsätze 22.1, 22.2 und einer der Gegeneinführschrägen 21.1, 21.2 verläuft je ein gerader Gegenabschnitt 23.1, 23.2, der die Kerbwirkung in dem Lagerrohr 20 minimiert.

Entlang der Mittelachse 16 der Lageraußenhülse 10 ist der Außenumfang 15 jeweils auf Höhe der zueinander formschlüssig korrespondierenden Elemente in Form der Absätze 12.1, 12.2, Gegenabsätze 22.1, 22.2, Einführschrägen 11.1, 11.2 und Gegeneinführschrägen 21.1, 21.2 größer dimensioniert als der Innenumfang 25 des Lagerrohrs 20 entlang der Mittelachse 26 des Lagerrohrs 20. Dadurch muss die Lageraußenhülse 10 beim Einpressen in das Lagerrohr 20 komprimiert werden und es kommt zu der in Fig. 3 gezeigten Überdeckung 30 mit der daraus resultierenden Presspassung bzw. dem daraus resultierenden Kraftschluss zwischen der Lageraußenhülse 10 und dem Lagerrohr 20 entlang der Profile 14, 24. Die erforderliche Auspresskraft in Auspressrichtung 3 zum Demontieren des formschlüssigen Verbunds 4 wird dadurch stark erhöht.

Hierneben ist zu erkennen, dass zwischen den Absätzen 12.1, 12.2 und den Gegenabsätzen 22.1, 22.2 Flächenauflagen 40.1, 40.2 zustande kommen, die bei einer Bewegung der Lageraußenhülse 10 in Auspressrichtung 3 zu einer Gegenkraft führt, die die notwendige Auspresskraft zum Lösen des festen Sitzes in dem formschlüssigen Verbund 4 weiter erhöht.

Figur 4 zeigt rein schematisch ein Kraftfahrzeug 8 mit einem formschlüssigen Verbund 4 gemäß der zuvor beschriebenen Ausführungsbeispiele mit einer Lageraußenhülse 10 eines Elastomerlagers 5 und einem Lagerrohr 20.

Die Lageraußenhülse 10 ist hier mit seinen inneren Komponenten schematisch angedeutet, die zusammen mit der Lageraußenhülse 10 das Elastomerlager 5 bilden. Bei diesen inneren Komponenten, die innerhalb der Lageraußenhülse 10 angeordnet sind, kann es sich beispielsweise um einen Kern, insbesondere starren Kern, und beispielsweise einem Elastomer, beispielsweise aus Polyamid, handeln, welches zwischen dem Kern und der Lageraußenhülse 10 angeordnet ist.

Vorliegend ist das Lagerrohr 20 an einer zweiten Fahrzeugkomponenten 7, beispielsweise einem Hilfsrahmen, befestigt. Insbesondere kann das Lagerrohr 20 an der zweiten Fahrzeugkomponente 7 angeschweißt sein. Ferner ist das Elastomerlager 5 an einer ersten Fahrzeugkomponente 6, beispielsweise einem Elektromotor, befestigt.

### Bezugszeichenliste

- 1: System
- 2: Einpressrichtung
- 3: Auspressrichtung
- 4: formschlüssiger Verbund
- 5: Elastomerlager
- 6: erste Fahrzeugkomponente
- 7: zweite Fahrzeugkomponente
- 8: Kraftfahrzeug
- 10: Lageraußenhülse
- 11.1, 11.2: Einführschräge
- 12.1, 12.2: Absatz
- 13.1, 13.2: gerader Abschnitt
- 14: Profil, Außenprofil
- 15: Außenumfang
- 16: Mittelachse der Lageraußenhülse
- 20: Lagerrohr
- 21.1, 21.2: Gegeneinführschräge
- 22.1,22.2: Gegenabsatz
- 23.1, 23.2: gerader Gegenabschnitt
- 24: Profil, Innenprofil
- 25: Innenumfang
- 26: Mittelachse des Lagerrohrs
- 30: Überdeckung
- 40.1, 40.2: Flächenauflage

## Patentansprüche

1. System (1) aus einer flexiblen Lageraußenhülse (10) eines Elastomerlagers und einem Lagerrohr (20), wobei die Lageraußenhülse (10) und das Lagerrohr (20) dazu eingerichtet sind, dass die Lageraußenhülse (10) entlang einer Einpressrichtung (2) in das Lagerrohr (20) eingepresst wird, um einen formschlüssigen Verbund (4) zwischen der Lageraußenhülse (10) und dem Lagerrohr (20) herzustellen, wobei die Lageraußenhülse (10) ein Außenprofil (14) mit nach außen abstehenden Absätzen (12.1, 12.2) und in die Einpressrichtung (2) nach innen verlaufenden Einführschrägen (11.1, 11.2) aufweist, und wobei das Lagerrohr (20) ein zu dem Außenprofil (14) der Lageraußenhülse (10) formschlüssig korrespondierendes Innenprofil (24) für den formschlüssigen Verbund zwischen der Lageraußenhülse (10) und dem Lagerrohr (20) aufweist, **dadurch gekennzeichnet, dass** zumindest das Innenprofil (24) des Lagerrohrs (20) starr ausgebildet ist, sodass sich das Außenprofil (14) der Lageraußenhülse (10) beim Einpressen der Lageraußenhülse (10) in das Lagerrohr (20) verformen kann und das Innenprofil (24) des Lagerrohrs (20) beim Einpressen der Lageraußenhülse (10) in das Lagerrohr (20) nicht verformen kann.

2. System (1) nach Anspruch 1, wobei die Absätze (12.1, 12.2) und/oder die in die Einpressrichtung (2) verlaufenden Einführschrägen (11.1, 11.2) entlang 20 % bis 100 % eines Außenumfangs (15) der Lageraußenhülse (10) verlaufen.

3. System (1) nach Anspruch 1 oder 2, wobei das Innenprofil (24) zu den Absätzen (12.1, 12.2) formschlüssig korrespondierende Gegenabsätze (22.1, 22.2) und zu den Einführschrägen (11.1, 11.2) formschlüssig korrespondierende und in die Einpressrichtung (2) verlaufende Gegeneinführschrägen (21.1, 21.2) aufweist.

4. System (1) nach Anspruch 3, wobei die Gegenabsätze (22.1, 22.2) und/oder die in die Einpressrichtung (2) verlaufenden Gegeneinführschrägen (21.1, 21.2) entlang 20 % bis 100 % eines Innenumfangs (25) des Lagerrohrs (20) verlaufen.

5. System (1) nach einem der voranstehenden Ansprüche, wobei die Einführschrägen (11.1, 11.2) an den nach außen abstehenden Absätzen (12.1, 12.2) ansetzen und nach innen verlaufen.

6. System (1) nach einem der voranstehenden Ansprüche, wobei gerade Abschnitte (13.1, 13.2) an den Einführschrägen (11.1, 11.2) ansetzen und zu den Absätzen (12.1, 12.2) verlaufen.

7. System (1) nach einem der voranstehenden Ansprüche, wobei das Lagerrohr (20) starr, insbesondere aus einem Metall, ausgebildet ist.

8. System (1) nach einem der voranstehenden Ansprüche, wobei die Absätze (12.1, 12.2) sich in einem rechten Winkel zu einer Mittelachse (16) der Lageraußenhülse (10) erstrecken.

9. Formschlüssiger Verbund (4) einer Lageraußenhülse (10) eines Elastomerlagers mit einem Lagerrohr (20) eines Systems (1) gemäß einem der voranstehenden Ansprüche.

10. Kraftfahrzeug (8) mit einem formschlüssigen Verbund (4) gemäß Anspruch 9, wobei ein Elastomerlager (5), welches die Lageraußenhülse (10) aufweist, die mit dem Lagerrohr (20) formschlüssig verbunden ist, mit einer ersten Fahrzeugkomponente (6) des Kraftfahrzeugs (8) gekoppelt ist und das Lagerrohr (20) mit einer zweiten Fahrzeugkomponente (7) des Kraftfahrzeugs (8) gekoppelt ist.
